Europäisches Patentamt

European Patent Office

Office européen des brevets

(11) Veröffentlichungsnummer: **0 459 102 A1**

# EUROPÄISCHE PATENTANMELDUNG

(21) Anmeldenummer: 91104596.1

(22) Anmeldetag: 23.03.91

(51) Int. Cl.⁵: **D01H 1/22**, D01H 13/14, D01H 5/32, H02H 7/085

(30) Priorität: 14.05.90 DE 4015483

(43) Veröffentlichungstag der Anmeldung:
04.12.91 Patentblatt 91/49

(84) Benannte Vertragsstaaten:
CH DE FR IT LI

(71) Anmelder: Zinser Textilmaschinen GmbH
Hans-Zinser-Strasse Postfach 1480
W-7333 Ebersbach/Fils(DE)

(72) Erfinder: Bührer, Matthias, Dipl.-Ing.
In den Schiessgärten 2/2
W-7311 Schlierbach(DE)
Erfinder: Kiehl, Werner, Dr.
Theodor-Fontane-Strasse 55
W-7410 Reutlingen(DE)
Erfinder: Buchholz, Andreas, Dipl.-Ing.
Krapfenreuther Strasse 29
W-7333 Ebersbach/Fils(DE)

(54) Verfahren und Vorrichtung zur Überwachung des Verzugsverhältnisses in einem Streckwerk von Spinnereimaschinen.

(57) Die Erfindung betrifft ein Verfahren zur Überwachung des Verzugsverhältnisses in einem Streckwerk von Spinnereimaschinen mit einem oder mehreren synchron laufenden Elektromotoren, nach dem zur Vermeidung eines Fehlverzuges die Temperatur mindestens eines Elektromotors (1) überwacht wird und nach dem bei Überschreiten einer vorbestimmten Grenztemperatur ein Störsignal ausgelöst wird, das einem Störanzeigeelement (4) und/oder einer Abschaltvorrichtung (6) für die Elektromotoren zugeführt wird. Weiterhin betrifft die Erfindung eine Vorrichtung zur Durchführung des Verfahrens. Erfindungsgemäß findet als Element, das gleichzeitig die Aufgabe eines Temperaturfühlers und die einer Abschaltvorrichtung erfüllt, vorzugsweise eine Thermo-Schmelzsicherung Verwendung.

Fig. 2

Die Erfindung betrifft ein verfahren zur Überwachung des Verzugsverhältnisses in einem Streckwerk von Spinnereimaschinen mit den Merkmalen des Oberbegriffs des Patentanspruches 1 sowie eine Vorrichtung zur Durchführung dieses Verfahrens mit den Merkmalen des Oberbegriffs des Patentanspruches 2.

In Streckwerken von Spinnereimaschinen werden Verbände aus Fasern oder endlose synthetische Fäden verstreckt. Ein Streckwerk umfaßt Streckorgane, wie Lieferwalzen und Galetten. Wenigstens ein Streckorgan wird von einem Elektromotor mit vorbestimmter Drehzahl angetrieben.

Insbesondere endlose synthetische Fäden, in gewissem Maße jedoch auch Fäden aus Fasern endlicher Länge reagieren beim Verstrecken bisweilen sehr empfindlich auf fehlerhafte Verzugsverhältnisse. Ein fehlerhafter Verzug führt zu Ausschuß an Fäden und Folgeprodukten. Fehler beim Verstrecken sind häufig nur schwer erkennbar und können zu großen Mengen Ausschuß mit erheblichen Verlusten führen. Es ist somit notwendig, den fehlerhaften Verzug der Fäden frühzeitig, möglichst schon beim Verstreckvorgang zu erkennen.

Der Erfindung liegt die Aufgabe zugrunde, ein Verfahren und eine Vorrichtung zur Überwachung des Verzugsverhältnisses in einem Streckwerk von Spinnereimaschinen zu schaffen, wodurch ein fehlerhafter Verzug frühzeitig angezeigt und/oder durch Abschalten des Streckwerkantriebs unter Aufrechterhaltung eines möglichst einfachen Aufbaus des Streckwerks vermieden wird.

Die Erfindung löst diese Aufgabe mit den kennzeichnenden Merkmalen der Patentansprüche 1 und 2.

Die Erfindung geht von der Erkenntnis aus, daß insbesondere in Streckwerken für synthetische Fäden mit elektromotorisch angetriebenen Streckorganen eine erhöhte Lagerreibung, der Ausfall einer Motorwicklung oder dergleichen zu einer erhöhten Belastung des Motors bzw. zu einem erhöhten Strom durch die übrigen Wicklungen und damit zu einer Temperaturerhöhung in dem Elektromotor führt. Die Überwachung und Feststellung der Motortemperatur kann mit einfachsten Mitteln, zum Beispiel mit an sich bekannten Temperaturfühlern erfolgen. Bei Überschreiten einer vorgegebenen Grenztemperatur erfolgt eine Störanzeige und/oder ein Abschalten des gestörten Antriebsmotors. Als Antriebsmotoren finden vor allem Synchronmotoren oder quasisynchron laufende Reluktanzmotoren Verwendung.

Erfindungsgemäß werden als besonders einfache Temperaturfühler für einen Elektromotor Thermo-Schmelzsicherungen verwendet. Diese sind vorzugsweise an einer Position am Motor anzuordnen, die einerseits in gutem thermischen Kontakt mit der Motorwicklung steht, andererseits aber auch den einfachen mechanischen Austausch ermöglicht sowie den Sicherheitsanforderungen genügt. Hierfür bietet sich beispielsweise der Klemmenkasten an.

Wird eine solche Thermo-Schmelzsicherung als Temperaturfühler in eine Speiseleitung des Antriebsmotors eingeschaltet, ergibt sich hierdurch zusätzlich zum Temperaturfühler auch noch die Abschaltvorrichtung.

Weitere Ausgestaltungen der Erfindung ergeben sich aus den Unteransprüchen.

Die Erfindung wird nachfolgend anhand von in der Zeichnung dargestellten Ausführungsbeispielen näher erläutert. In der Zeichnung zeigen:

Fig. 1    ein Schaltschema eines Antriebsmotors für ein Streckwerk mit Temperaturfühler und Störanzeige;

Fig. 2    ein Schaltschema wie in Fig. 1 mit zusätzlicher Abschaltvorrichtung in der Speiseleitung des Antriebsmotors;

Fig. 3    ein Schaltbild eines Antriebsmotors, vorzugsweise eines Reluktanzmotors, mit temperaturgesteuerten Schaltern und dazu parallel geschalteten Störanzeigeelementen in Speiseleitungen;

Fig. 4    ein Schaltbild wie in Fig. 3 mit anders angeordneten Störanzeigeelementen zur Überwachung der temperaturgesteuerten Schalter;

Fig. 5    ein Schaltbild eines Antriebsmotors mit Motorwicklungen in Sternschaltung und zugehörigen temperaturgesteuerten Schaltern und einem Störanzeigeelement;

Fig. 6    ein Schaltschema für die Antriebsmotoren eines Streckwerks einer Spinnereimaschine;

Fig. 7    ein Schaltschema mit Speisung von mehreren Antriebsmotoren über Umformer und indirekter Anordnung von temperaturgesteuerten Schaltern und Störanzeigeelementen; und

Fig. 8    ein weiteres geändertes Schaltbild für mehrere Antriebsmotoren mit Fühlerelementen und Störanzeigeelementen.

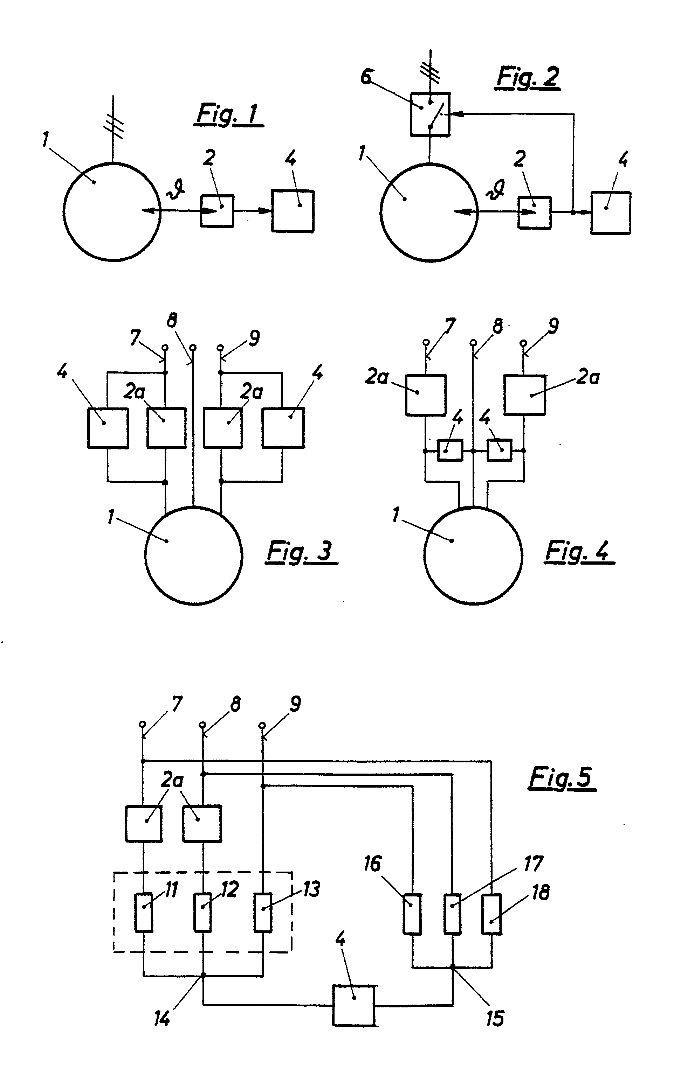

Bei dem Ausführungsbeispiel nach Fig. 1 ist dem Antriebsmotor 1 für ein nicht dargestelltes Streckwerk einer Spinnereimaschine ein Temperaturfühler 2 zugeordnet. Als Antriebsmotor findet vorzugsweise ein dreiphasiger Synchronmotor oder ein Motor mit quasisynchronem Laufverhalten, z.B. ein Reluktanzmotor Verwendung.

Treten an den Streckstellen des Streckwerkes störende mechanische Abweichungen, z.B. Materialwickel an rotierenden Wellen auf, muß der Antriebsmotor 1 ein erhöhtes Drehmoment abgeben. Dies kann bei Synchronmotoren durch das Außertrittfallen des Motors und bei quasisynchron laufenden Motoren zu Drehzahländerungen führen, wodurch sich in jedem Fall ein fehlerhaftes Verzugsverhältnis ergibt. Gleichzeitig hat eine Erhöhung der Motorlast eine erhöhte Stromaufnahme zur Folge, die ihrerseits zu einer Erhöhung der Temperatur der Motorwicklungen führt.

Der Temperaturfühler 2 erzeugt bei Überschreiten einer vorgegebenen Grenztemperatur ein Signal, das einem Störanzeigeelement (4) zugeführt wird. Bei Auftreten eines derartigen Fehlers erzeugt das Störanzeigeelement (4) ein z.B. optisches Signal. Als einfache Störanzeigeelemente können beispielsweise Glimmlampen oder dergleichen verwendet werden.

Somit kann erfindungsgemäß der Fehlverzug in einem Streckwerk, der durch Drehmomenterhöhungen hervorgerufen wird, durch die Überwachung der Temperatur des Antriebsmotors erkannt und bei Vorhandensein entsprechender Vorrichtungen vermieden werden.

Bei dem Ausführungsbeispiel nach Fig. 2 ist zusätzlich in der dreiphasigen Speiseleitung des Motors ein steuerbarer, mindestens zwei der drei Phasen schaltender Schalter 6 angeordnet, welcher ebenfalls durch den Temperaturfühler 2 angesteuert wird. Bei Überschreiten einer vorgegebenen Grenztemperatur des Antriebsmotors 1 wird der steuerbare Schalter 6 in den Aus-Zustand gesteuert und damit der Antriebsmotor 1 abgeschaltet.

Bei Verwendung temperaturgesteuerter Schaltvorrichtungen, wie z.B. Thermo-Schmelzsicherungen, Bimetallschalter, temperatursensorgesteuerter Schütze oder elektronischer temperaturgesteuerter Schaltvorrichtungen, lassen sich die beiden oben beschriebenen Funktionen eines Temperaturfühlers und eines steuerbaren Schalters mittels einem einzigen Bauelement erfüllen.

Erfindungsgemäß findet als Temperaturfühler 2 oder als temperaturgesteuerte Schaltvorrichtung vorzugsweise eine Thermo-Schmelzsicherung Verwendung. Hierdurch ergibt sich der Vorteil eines geringen finanziellen und technischen Aufwandes.

Zur Überwachung der Motortemperatur sind die Temperaturfühler oder temperaturgesteuerten Schalter vorzugsweise an einer Position am Motor anzuordnen, die in gutem thermischen Kontakt mit den Motorwicklungen steht und den Sicherheitsanforderungen genügt. Bei der Verwendung von Schmelzsicherungen ergibt sich zusätzlich die Forderung, daß die gewählte Position den einfachen mechanischen Austausch ermöglicht. Hierfür bietet sich beispielsweise der Klemmenkasten an.

Wie aus Fig. 3 ersichtlich, sind in den zwei Speiseleitungen 7 und 9 des dreiphasigen Antriebsmotors 1 in Reihe mit den Motorwicklungen temperaturgesteuerte Schaltvorrichtungen 2a, z.B. in Form von Thermo-Schmelzsicherungen, angeordnet.

Wird die vorbestimmte Höchsttemperatur überschritten, spricht zunächst ein temperaturgesteuerter Schalter 2a an und unterbricht die zugehörige Speiseleitung. Hierdurch erhöht sich die Stromaufnahme der restlichen Phasen weiter. Entsprechend steigt auch die Motortemperatur weiter an, so daß in kürzester Zeit auch der zweite temperaturgesteuerte Schalter 2a anspricht. Dadurch wird auch die zweite Speiseleitung aufgetrennt und der Antriebsmotor abgeschaltet.

Um das Ansprechen der temperaturgesteuerten Schalter 2a leicht erkennbar zu machen, sind den temperaturgesteuerten Schaltern 2a Störanzeigeelemente 4 parallel geschaltet. Durch das Auftrennen der entsprechenden Speiseleitung bei Überschreiten der Grenztemperatur liegt an dem jeweiligen Störanzeigeelement 4 eine Spannung an, wodurch die Anzeige aktiviert wird.

Bei der Ausführungsform nach Fig. 4 sind die Störanzeigeelemente 4 zwischen den Speiseleitungen 7 und 8 bzw. 8 und 9 angeschlossen und den temperaturgesteuerten Schaltern 2a in den Speiseleitungen 7 und 9 nachgeordnet. Im Gegensatz zur Schaltungsanordnung nach Fig. 3 werden die Störanzeigeelemente 4 durch das Fehlen der Spannung bei Unterbrechung der zugehörigen Speiseleitung aktiviert.

Bei der Ausführungsform nach Fig. 5 ist ein Antriebsmotor 4 verwendet, dessen Motorwicklungen 11, 12, 13 in Stern geschaltet sind. In den Speiseleitungen 7 und 8 liegen die temperaturgesteuerten Schalter 2a. Das einzige vorhandene Störanzeigeelement 4 ist an den Motorsternpunkt 14 angeschlossen. Mit den Speiseleitungen 7, 8, 9 ist ein Netzwerk von drei Widerständen 16, 17, 18 verbunden. An den Sternpunkt 15 ist das Störanzeigeelement 4 angeschlossen. Tritt durch das Ansprechen eines oder beider temperaturgesteuerter Schalter 2a eine Potentialverschiebung am Sternpunkt 14 auf, so entsteht ein Potentialunterschied zwischen den Sternpunkten 14 und 15. Das Störanzeigeelement 4 spricht an. Hierdurch ist es auch möglich, jegliche Fehlfunktion des Antriebsmotors 1, die eine unsymmetrische Spannungsverteilung im Motor hervorruft, frühzeitig zu erkennen.

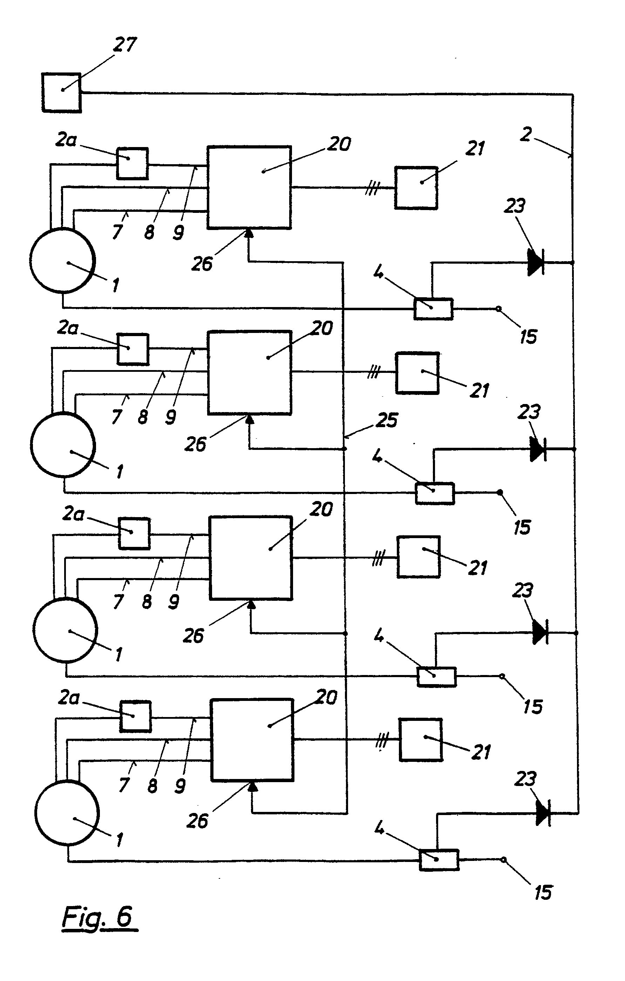

In dem Ausführungsbeispiel nach Fig. 6 treiben die Antriebsmotoren 1 rotierende Streckwerkselemente eines Streckwerks einer Spinnereimaschine an. Einer der Antriebsmotoren 1 kann zur Aufwindung des Streckmaterials und ein weiterer der Antriebsmotoren 1 kann zur Materiallieferung eingesetzt sein. Jeder dreiphasige Antriebsmotor 1 ist über Speiseleitungen 7, 8, 9 über je eine Trenneinheit 20 an je eine Speisestromquelle 21, zum Beispiel einen Umformer, angeschlossen.

Jedem in Sternschaltung nach Fig. 5 geschalteten Antriebsmotor 1, z.B. Reluktanzmotor, ist ein Störanzeigeelement 4 zugeordnet, das an einem Bezugspotential an einer Bezugsstelle 15 angeschlossen ist. In jeder zugehörigen Speiseleitung 9 liegt ein temperaturgesteuerter Schalter 2a, z.B. in Form einer Thermo-Schmelzsicherung.

Die Ausgänge dieser Störanzeigeelemente 4 sind über ODER-Stufen 23 an eine gemeinsame Steuerleitung 24 angeschlossen. Diese Steuerleitung 24 ist über eine Verbindungsleitung 25 an die Steuereingänge 26 für die Trenneinheiten 20 angeschlossen. Bei Ansprechen eines temperaturgesteuerten Schalters 2a eines Motors zeigt das entsprechende Störanzeigeelement 4 aufgrund der durch das Auftrennen einer Speiseleitung erzeugten Potentialverschiebung eine Störung an. Gleichzeitig erzeugt dieses Störanzeigeelement ein Signal, das über die ODER-Stufe 23, die Steuerleitung 24 und die Verbindungsleitung 25 allen Steuereingängen 26 der Trenneinheiten 20 zugeführt wird und das Abschalten aller Motoren veranlaßt.

Zugleich kann die Leitung 24 auch an den Fadenschneider 27 des Streckwerkes angeschlossen sein. Dieser wird somit bei Ausfall eines Antriebsmotors 1 mit aktiviert.

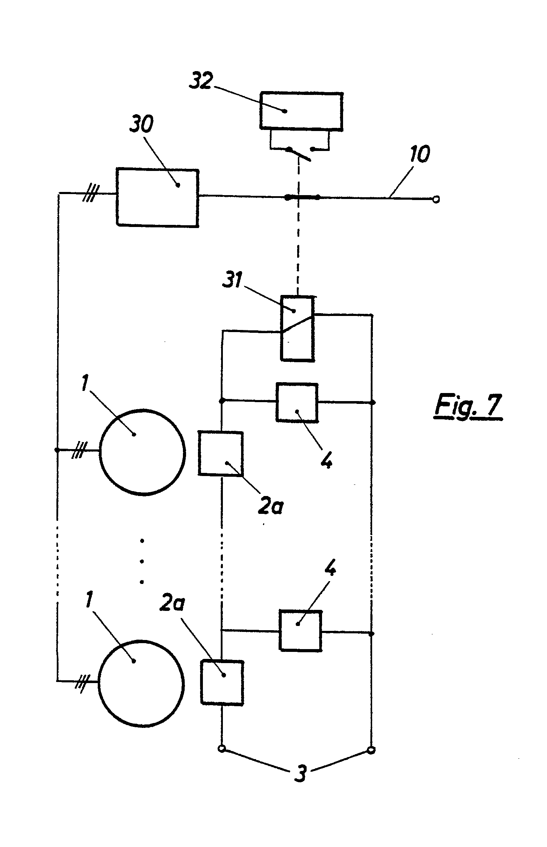

Bei der Ausführungsform nach Fig. 7 sind mehrere, mit synchroner Drehzahl laufende Antriebsmotoren 1 an ein Dreiphasenspeisenetz angeschaltet, das von einem Umformer 30 gespeist wird. Diese Motoren treiben z.B. die in einzelne, gleich schnell laufende Walzen unterteilte erste Walze eines sehr langen Streckwerks einer Spinnereimaschine an.

Jedem dieser Antriebsmotoren 1 einer "horizontalen" Motorengruppe einer Spinnereimaschine ist wiederum ein temperaturgesteuerter Schalter 2a, z.B. in Form einer Thermo-Schmelzsicherung, zugeordnet. Die Thermo-Schmelzsicherungen 2a der einzelnen Motoren sind in Reihe geschaltet und werden von einer nicht dargestellten Spannungsquelle an den Klemmen 3 gespeist. Den einzelnen temperaturgesteuerten Schaltern 2a sind Störanzeigeelemente 4 zugeordnet, welche jeweils mit dem Ausgang des entsprechenden temperaturgesteuerten Schalters und einer Speiseklemme 3 verbunden sind. Eine derartige Verschaltung wird in der Fachsprache als sog. "Partyline" bezeichnet. Bei Ansprechen eines temperaturgesteuerten Schalters 2a werden alle dieser Sicherung nachgeordneten Anzeigen 4 eine Störung anzeigen; damit ist der erste gestörte Motor schnell zu identifizieren. Der Nachteil fehlender Information über alle folgenden Motoren wird durch den Vorteil eines sehr einfachen Aufbaus aufgewogen.

Alternativ kann am Ende dieses Kreises zusätzlich beispielsweise ein Relais 31 eingeschaltet sein, das bei Ansprechen eines temperaturgesteuerten Schalters 2a weitere Aktionen auslöst, wie z.B. das Alarmieren des Bedienpersonals mittels eines akustischen Signalgebers 32 und/oder die Abschaltung der gesamten Motorgruppe wegen drohenden Fehlverzuges durch Auftrennen der Steuerleitung 10 des Umformers 30.

Für jede weitere in einzelne Walzen unterteilte Walze eines solchen sehr langen Streckwerks einer Spinnereimaschine kann eine derartige Anordnung, bestehend aus mehreren Motoren, einem Umformer und einer Überwachungsschaltung vorhanden sein. Jedes Relais 31 einer Überwachungsschaltung liegt mit einem Kontaktpaar derart in der gemeinsamen Steuerleitung 10, welche mit dem Steuereingang jedes Umformers 30 verbunden ist, daß bei Ansprechen eines Fühlers alle Motorengruppen abgeschaltet werden und so das gesamte Streckwerk stillgesetzt wird.

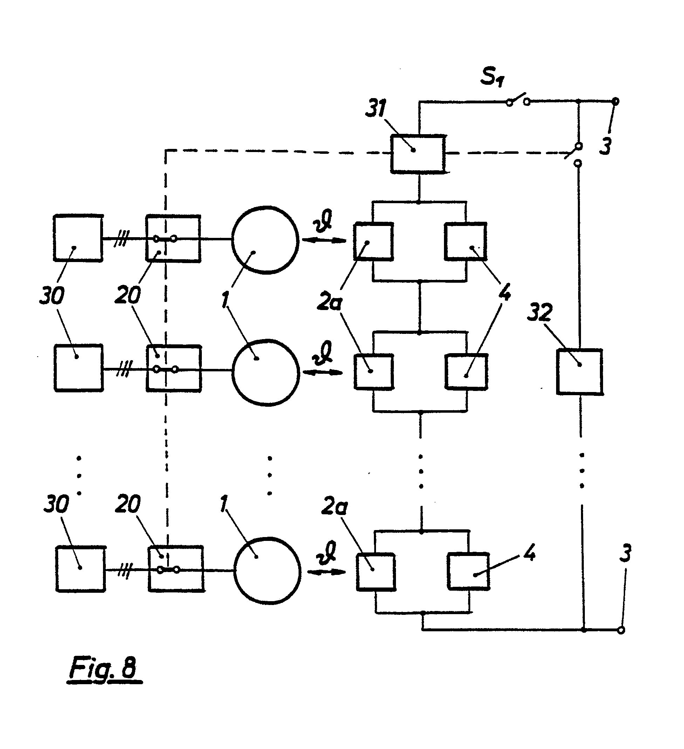

Fig. 8 zeigt eine weitere Ausführungsform einer Überwachungsschaltung. Dargestellt ist die Anordnung der "Partyline" zur Überwachung einer "vertikalen" Motorengruppe, d.h. zur Überwachung einer Arbeitsstelle. Dabei ist jeder Antriebsmotor 1 über eine Trenneinheit 20, die z.B. aus den Kontakten eines Schützes 31 bestehen kann, an einer Speisestromquelle 30, z.B. einem Umformer, angeschlossen. Jedem Antriebsmotor 1 ist ein temperaturgesteuerter Schalter 2a, z.B. in Form einer Thermo-Schmelzsicherung, zugeordnet, dem wiederum ein Störanzeigelement 4 parallelgeschaltet ist. Die gesamte Kette wird aus einer separaten Versorgung an den Klemmen 3 gespeist. In den Kreis eingeschleift ist ein Stromfühlelement 31, z.B. ein elektronisches Schütz, das die Trenneinheiten 20 ansteuert.

Wird an einem der temperaturgesteuerten Schalter 2a die Grenztemperatur erreicht, so löst er aus und aktiviert damit das ihm zugeordnete Störanzeigelement 4. Gleichzeitig wird damit der Speisestrom durch den an den Klemmen 3 angeschlossenen Kreis soweit geändert, daß das Stromfühlelement 31 anspricht und über die Trenneinheiten 20 die Antriebsmotoren 1 stillsetzt. Über den Signalgeber 32 wird dabei ein z.B. akustischer Bedienerruf ausgelöst. Der Schalter S1 dient zur manuellen Betätigung der Trenneinheiten 20.

Erfindungsgemäß wird somit ein Verfahren zur Überwachung des Verzugsverhältnisses in einem Streckwerk von Spinnereimaschinen geschaffen, wodurch ein fehlerhafter Verzug frühzeitig angezeigt und/oder durch Abschalten des Streckwerkantriebs unter Aufrechterhaltung eines möglichst einfachen Aufbaus des Streckwerks vermieden wird.

**Patentansprüche**

1. Verfahren zur Überwachung des Verzugsverhältnisses in einem Streckwerk von Spinnereimaschinen mit einem oder mehreren zur jeweiligen Speisefrequenz synchron laufenden Elektromotoren, dadurch gekennzeichnet,

daß zur Vermeidung eines Fehlverzuges die Temperatur mindestens eines Elektromotors (1) überwacht wird und daß

bei Überschreiten einer vorbestimmten Grenztemperatur ein Störsignal ausgelöst wird, das einem Störanzeigeelement (4) und/oder einer Abschaltvorrichtung (6) für die Elektromotoren zugeführt wird.

2. Vorrichtung zur Durchführung des Verfahrens nach Anspruch 1 in einem Streckwerk von Spinnereinmaschinen mit einem oder mehreren synchron laufenden Elektromotoren, welche jeweils ein rotierendes Streckwerkselement des Streckwerks antreiben, dadurch gekennzeichnet, daß

mindestens ein Temperaturfühler (2) zur Überwachung der Temperatur eines Elektromotors (1) vorhanden ist, der mit einem Störanzeigeelement (4) und/oder einer Abschaltvorrichtung (6) verbunden ist.

3. Vorrichtung nach Anspruch 2, dadurch gekennzeichnet, daß als Kombinationen eines Temperaturfühlers und einer Abschaltvorrichtung ein temperaturgesteuerter Schalter (2a) verwendet ist.

4. Vorrichtung nach Anspruch 3, dadurch gekennzeichnet, daß der temperaturgesteuerte Schalter (2a) als Bimetallschalter, als Thermo-Schmelzsicherung, als temperaturfühlergesteuerter Schütz oder eine temperaturgesteuerte elektronische Abschaltvorrichtung ausgebildet ist.

5. Vorrichtung nach einem oder mehreren der vorstehenden Ansprüche, dadurch gekennzeichnet, daß in mindestens eine Speiseleitung der Motorwicklungen mindestens eines Motors ein temperaturgesteuerter Schalter (2a) eingeschaltet ist.

6. Vorrichtung einem oder mehreren der Ansprüche 2 bis 5, dadurch gekennzeichnet, daß die Temperaturfühler (2) oder die temperaturgesteuerten Schalter (2a) in den Klemmenkasten der Motoren angeordnet sind.

7. Vorrichtung nach einem oder mehreren der vorstehenden Ansprüche, dadurch gekennzeichnet, daß bei in Sternschaltung geschalteten Motorwicklungen (11, 12, 13) ein Störanzeigeelement (4) an den Motor-Sternpunkt (14) mindestens eines Motors und an den Bezugs-Sternpunkt der Motorspeisung angeschlossen ist.

8. Vorrichtung nach einem oder mehreren der vorstehenden Ansprüche, dadurch gekennzeichnet, daß bei in Sternschaltung geschalteten Motorwicklungen (11, 12, 13) ein Anzeigeelement (4) an den Motor-Sternpunkt (14) mindestens eines Motors und an einen Bezugspotentialknoten (15) eines Widerstandsnetzwerks (16, 17, 18) angeschlossen ist.

9. Vorrichtung nach Anspruch 8, dadurch gekennzeichnet, daß jedem Motor (4) eine Trenneinheit (20) und ein Störanzeigeelement (4) zugeordnet ist und daß die Störanzeigeelemente (4) mit den Steuereingängen (26) der Trenneinheiten (20) über ODER-Stufen (23) und Steuerleitungen (24,25) verbunden sind.

10. Vorrichtung nach einem oder mehreren der Ansprüche 2, 3, 4 und 6, dadurch gekennzeichnet, daß mehrere von mindestens einem Umformer (30) gespeiste Motoren (1) vorhanden sind und daß jedem Motor ein temperaturgesteuerter Schalter (2a) und ein Störanzeigeelement (4) zugeordnet sind, welche in Form einer "Partyline" miteinander verschaltet sind.

11. Vorrichtung nach Anspruch 10, dadurch gekennzeichnet, daß am Ende der "Partyline" ein Schaltelement (31) angeordnet ist, das bei Ansprechen mindestens eines temperaturgesteuerten Schalters (2a) alle Umformer (30) derart ansteuert, daß die Motoren (1) stillgesetzt werden und/oder das mittels eines akustischen Signalgebers (32) einen Bedienerruf auslöst.

12. Vorrichtung nach einem oder mehreren der Ansprüche 2, 3, 4 und 6, dadurch gekennzeichnet, daß mehrere von mindestens einem Umformer (30) gespeiste Motoren (1) vorhanden sind und daß jedem Motor eine Parallelschaltung eines temperaturgesteuerten Schalters (2a) mit einem Störanzeigeelement (4) zugeordnet sind und daß die Klemmen (3) dieser in Reihe geschalteten Parallelschaltungen mit einer Spannungsquelle verbunden sind.

13. Vorrichtung nach Anspruch 12, dadurch gekennzeichnet, daß in die Reihenschaltung der Parallelschaltungen ein Schaltelement (31) eingeschaltet ist, das bei Ansprechen mindestens eines temperaturgesteuerten Schalters (2a) alle Umformer (30) derart ansteuert, daß die Motoren (1) stillgesetzt werden und/oder das mittels eines akustischen Signalgebers (32) einen Bedienerruf auslöst.

14. Vorrichtung nach Anspruch 12, dadurch gekennzeichnet, daß in die Reihenschaltung der Parallelschaltungen ein Schalter (S1) eingeschaltet ist, der zur manuellen Stillsetzung der Motoren (1) dient.

Fig. 1

Fig. 2

Fig. 3

Fig. 4

Fig. 5

Fig. 6

Fig. 7

**Fig. 8**

# EUROPÄISCHER RECHERCHENBERICHT

Nummer der Anmeldung

**EP 91 10 4596**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN vol. 012, no. 015 (C-469)(2862) 16. Januar 1988 & JP-A-62 170 538 (TOYODA AUTOM LOOM WORKS ) 27. Juli 1987 * das ganze Dokument * | 1-4,6 | D 01 H 1/22<br>D 01 H 13/14<br>D 01 H 5/32<br>H 02 H 7/085 |
| Y | PATENT ABSTRACTS OF JAPAN vol. 012, no. 491 (C-554)21. Dezember 1988 & JP-A-63 203 814 (MURATA MACH ) 23. August 1988 * das ganze Dokument * | 1-4,6 | |
| A | JAPANESE PATENTS ABSTRACTS Section CH, week 9004, 7 March 1990 Derwent Publications Ltd, London, GB * class F, no 90-028130/04 & JP-A-01308123 (FUJI ELECTRIC MFG K.K.) 12 Dezember 1989 * | 1,2 | |
| A | EP-A-0 117 133 (R. GOODWIN INTERNATIONAL) * Abbildung 3 * | 5,7,8 | |
| A | US-A-4 340 886 (BOLDT ET AL.) * das ganze Dokument * | 10,12 | RECHERCHIERTE SACHGEBIETE (Int. Cl.5) |
| A | EP-A-0 266 254 (POMPES SALMSON) * das ganze Dokument * | 1,2 | D 01 H<br>H 02 H |
| A | WO-A-8 907 852 (J.H. FENNER & CO.) * das ganze Dokument * | 1,2 | |

Der vorliegende Recherchenbericht wurde für alle Patentansprüche erstellt

| Recherchenort | Abschlußdatum der Recherche | Prüfer |
|---|---|---|
| Den Haag | 12 September 91 | RAYBOULD B.D.J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie, übereinstimmendes Dokument